Europäisches Patentamt

European Patent Office

Office européen des brevets

(19)

(11) Veröffentlichungsnummer: **0 272 666**
**B1**

(12) **EUROPÄISCHE PATENTSCHRIFT**

(45) Veröffentlichungstag der Patentschrift: **23.01.91**

(21) Anmeldenummer: **87118926.2**

(22) Anmeldetag: **21.12.87**

(51) Int. Cl.⁵: **G 01 G 19/32, G 01 G 13/18**

(54) Wiegevorrichtung.

(30) Priorität: **24.12.86 DE 3644549**

(43) Veröffentlichungstag der Anmeldung:
**29.06.88 Patentblatt 88/26**

(45) Bekanntmachung des Hinweises auf die
Patenterteilung:
**23.01.91 Patentblatt 91/04**

(84) Benannte Vertragsstaaten:
**DE ES FR GB IT**

(56) Entgegenhaltungen:
**EP-A-0 074 260**
**EP-A-0 196 552**

(73) Patentinhaber: **ROVEMA**
**VERPACKUNGSMASCHINEN GMBH**
**Postfach 20**
**D-6301 Fernwald 2 (DE)**

(72) Erfinder: **Kammler, Roman, Dr.-Ing.**
**Wallstrasse 2**
**D-6520 Worms (DE)**
Erfinder: **Ade, Reiner, Dr.**
**Ritterhausstrasse 8**
**D-6350 Bad-Nauheim (DE)**
Erfinder: **Walter, Baur, Dr.**
**Herzbergstrasse 37-39**
**D-6466 Gründau 1 (DE)**

(74) Vertreter: **Missling, Arne, Dipl.-Ing.**
**Patentanwalt Bismarckstrasse 43**
**D-6300 Giessen (DE)**

Courier Press, Leamington Spa, England.

**Beschreibung**

Die Erfindung bezieht sich auf eine Wiegevorrichtung, insbesondere zum Wiegen von grobstückigen Produkten, mit einem Produktverteiler, mehreren Wiegeeinrichtungen, von denen jede einen vom Produktverteiler aus speisbaren Wiege-Produktbehälter und einen diesem zugeordneten Gewichtgeber aufweist, unterhalb der Wiege-Produktbehälter angeordneten Teilmengen-Produktbehältern, wobei einem Wiege-Produktbehälter mindestens zwei Teilmengen-Produktbehälter zugeordnet sind, in die der Inhalt der Wiege-Produktbehälter entleerbar ist, einem Sammeltrichter zum Sammeln von aus mehreren Teilmengen-Produktbehältern abgegebenen Teilmengen und einer Kombinations-Wahlschaltung, die aus den Teilmengen eine Kombination einer bestimmten Anzahl von Teilmengen ermittelt, die zusammen einer gewünschten Gesamtmenge möglichst nahekommen und die Entleerung in den Sammeltrichter durch Betätigung von Schleusen an den Teilmengen-Produktbehältern entsprechend steuert.

Solche Maschinen werden auch als Kombinationswiegemaschinen bezeichnet und werden hauptsächlich für das Abwiegen grobkörniger Güter verwendet, bei denen das einzelne Partikelgewicht im Verhältnis zu der abzuwiegenden Menge groß ist und stark schwankt. Um dennoch in solchen Fällen ein genaues Sollgewicht zu erreichen, wird die abzupackende Menge aus n-Teilmengen zusammengesetzt, wobei jede Teilmenge ein Gewicht von etwa 1/n aufweist, jedoch von diesem Gewicht im allgemeinen mehr oder weniger abweicht. Eine Kombinations-Wahlschaltung wählt aus vielen Teilmengen (Anzahl größer als n) solche Teilmengen aus, daß deren Summe dem gewünschten Gesamtgewicht möglicht nahe kommt. Die Genauigkeit, mit der das Sollgewicht erreicht werden soll, hängt von der Anzahl der in der Maschine vorhandenen Teilmengen ab, die zur Kombination herangezogen werden.

Um die Anzahl der vorhandenen Teilmengen zu erhöhen, erhöht man im allgemeinen die Anzahl der Gewichtgeber (Wiegebehälter) derart, daß ein Wiegebehälter mehrere Teilmengen-Behälter versorgen kann.

Bei einer Wiegevorrichtung der eingangs genannten Art (US—PS 4 538 693) wird zunächst das in einer Reihe fließende Produkt auf drei Rinnen aufgeteilt und danach von den drei Rinnen auf sechs Rinnen. Jeder der sechs Rinnen ist ein Wiegebehälter zugeordnet. Jedem Wiegebehälter ist ein Weichenelement zugeordnet, das aus einem schwenkbaren Trichter besteht. Jeder der schwenkbaren Trichter kann eine in ihm befindliche Portion wahlweise in einen von zwei Teilmengen-Produktbehältern abgeben. Für die Füllung von nur zwei Teilmengen-Produktbehältern ist eine Wiegezelle erforderlich. Die Maschine ist deshalb sehr teuer, da die Wiegebehälter teuere Bauelemente sind und ihre Leistungsfähigkeit in der Gesamtmaschine nicht voll ausgenutzt werden kann.

Bei einer weiteren bekannten Wiegevorrichtung (DE—OS 35 06 291) sind in einer oberen Ebene mehrere Wiegebehälter und in einer unteren Ebene mehrere Hilfsbehälter kreisförmig oder in längs geraden Linien angeordnet. Die Wiegebehälter können dank zweier Auslaßklappen das Wiegegut an verschiedenen Stellen in die Hilfsbehälter oder den Sammeltrichter direkt ablassen. Auch damit wird versucht, die Zahl der Wiegebehälter zu verringern.

Ein Nachteil der bekannten Wiegevorrichtung besteht darin, daß die Teilmengen in den Wiegebehältern nur dann zur Wahl der Kombination herangezogen werden können, wenn auch die Gewichte in den darunter liegenden Hilfsbehältern ausgewählt werden. Da dies nicht immer der Fall ist, ist die Anzahl der praktisch verwendbaren Kombinationen nicht wesentlich größer. Ein weiterer Nachteil ist der, daß die Fallwege der Teilmengen aus den Hilfsbehältern und den Wiegebehältern sehr unterschiedlich sind und daher auch die Fallzeiten. Dies führt wiederum zu einer beachtlichen Leistungsverminderung der Wiegemaschine.

Bei einer weiteren bekannten Wiegevorrichtung (DE—OS 30 26 059) ist ein Drehverteiler vorgesehen, mit dem der Inhalt eines Wiegebehälters an einen von acht Teilmengen-Produktbehältern übergeben wird, die auf einem kreisförmigen Träger befestigt sind, der relativ zu dem Trichter drehbar ist. Die Arbeitsgeschwindigkeit einer solchen Vorrichtung ist gering, da meist mehrere Drehschritte zum Aufnehmen einer abgewogenen Portion und zur Aufgabe an einen leeren Teilmengen-Produktbehälter nötig sind. Auch die Entnahme der Teilmengen kann nur nacheinander erfolgen, was wieder sehr zeitraubend ist. Zwar ist die Bauart der Maschine einfach, hingegegen die Verteilung der Portionen auf die Teilmengen-Produktbehälter und das Anzammeln von Teilmengen zu einer Gesamtportion so zeitraubend, daß die Leistung der Maschine unzureichend ist.

Der Erfindung liegt die Aufgabe zugrunde, eine Vorrichtung der eingangs genannten Art so auszubilden, daß mit geringem Bauaufwand einem Wiegebehälter mehr als zwei Teilmengen-Produktbehälter zugeordnet werden können.

Diese Aufgabe wird nach der Erfindung dadurch gelöst, daß in einer zweiten Verteilstation unterhalb der ersten Weichenelemente zweite Weichenelemente angeordnet sind, die in einer quer, vorzugsweise rechtwinklig zu der ersten Verteilebene orientierten zweiten Verteilebene schwenkbar sind, daß eventuell unterhalb der zweiten Verteilebene weitere Verteilebenen angeordnet sind, wobei die Verteilrichtungen in gleicher Weise abwechseln wie zwischen der ersten und zweiten Verteilebene und daß unterhalb der Weichenelemente der letzten Verteilebene Teilmengen-Produktbehälter angeordnet sind, die über die letzten Weichenelemente mit Teilmengen befüllbar sind.

Durch die Erfindung ist gewünschtenfalls eine sehr große Übersetzung bei schnellem Ablauf der Verteilung möglich. Im allgemeinen wird man sich damit begnügen, von einem Wiegebehälter aus vier Teilmengen-Produktbehälter zu speisen. Dieses Verhältnis ist bei der derzeitigen Arbeitsgeschwindigkeit von Wiegebehältern zweckmäßig. Sollten jedoch Wiegebehälter mit höherer Arbeitsgeschwindigkeit zur Verfügung stehen, so ist es unproblematisch, z.B. sechs oder acht oder zwölf Teilmengen-Produktbehälter sehr schnell von einem Wiegebehälter aus zu speisen. Die rasche Verteilung wird mit einem geringen Bauaufwand erreicht.

Bei einer bevorzugten Ausführungsform der Erfindung (Anspruch 2) bildet jeder Wiegebehälter oder ein an diesen anschließender Zwischenbehälter in an sich bekannter Weise ein erstes Weichenelement, wobei ein solcher Zwischenbehälter oder auch Wiegebehälter schwenkbar aufgehängt ist. Schwenkbewegungen lassen sich leicht und rasch durchführen, da nu geringe Massen um einen kleinen Drehwinkel zu bewegen sind. Hierbei können gemäß Anspruch 3 die Weichenelemente separate Baugruppen sein, die keine zusätzliche Funktion wie z.B. eine Wiegefunktion, erfüllen.

Gemäß einer weiteren Ausführungsform der Erfindung (Anspruch 4) sind mindestens einige Weichenelemente als kippbare Rinnen ausgebildet, von denen bei einem Verteilvorgang wahlweise eine der beiden Einzelrinnen befüllbar ist. Es handelt sich hierbei um Weichenelemente, die eine zusätzliche Funktion nicht ausfüllen müssen. In Ausgestaltung der Erfindung wird gemäß Anspruch 4 vorgeschlagen, daß mindestens einige Weichenelemente als kippbare Rinnen ausgebildet werden, von denen bei einem Verteilvorgang wahlweise eine der beiden Einzelrinnen befüllbar ist. In diesem Fall können in einer "Vervielfältigungsstufe" sechs Teilmengen-Produktbehälter von einem Wiegebehälter aus gefüllt werden.

Gemäß einer weiteren Ausführungsform der Erfindung (Anspruch 5) werden Verteilungskanäle benutzt, mit denen ebenfalls vier oder mehr Teilmengen-Produktbehälter bedient werden können.

Eine zweckmäßige Größe der Wiegevorrichtung 1 erhält man dann (Anspruch 6), wenn kreisförmig oder längs einer Linie insgesamt vierundzwanzig Teilmengen-Produktbehälter auf Kreisen oder auf einer geraden Linie angeordnet werden. Es gehen dann von einer Verteilungszentrale sechs Rinnen aus, von denen jede zu einem Wiegebehälter führt, der dann mittels der beschriebenen Verteilungsvorrichtungen den Inhalt jedes Wiegebehälters auf vier Teilmengen-Produktbehälter verteilt. Hiermit lassen sich bereits sehr schnell sehr genaue Wiegungen erzielen.

Es ist jedoch auch möglich (Anspruch 8), die Behälter in einer vertikalen Ebene anzuordnen, wobei im Anspruch 9 eine symmetrische Anordnung und in Anspruch 10 eine einseitige Anordnung definiert ist. Die einseitige Anordnung gemäß Anspruch 10 hat im Verhältnis zur Anzahl der Wiegebehälter eine sehr hohe Leistung.

Im folgenden werden Ausführungsbeispiele der Erfindung unter Bezugnahme auf die Zeichnung näher erläutert. Es zeigen:

Fig. 1 einen vertikalen Schnitt durch eine Kombinationswaage, bei der der Zuführbehälter und die Hilfsbehälter kreisförmig angeordnet sind, entsprechend der Linie I—I in Fig. 5,

Fig. 2 eine Seitenansicht, entsprechend der Richtung II in Fig. 1,

Fig. 3 einen vertikalen Schnitt durch eine Baugruppe der Kombinationswaage, bei der zwischen dem Wiegebehälter und der Zuteilrinne ein Vorratsbehälter angeordnet ist,

Fig. 4 einen Schnitt durch einen Verteiler nach Linie IV—IV in Fig. 4a, der als Rohr mit zwei Kanälen und zwei Klappen ausgebildet ist,

Fig. 4a einen vertikalen Schnitt nach Linie IVa—IVa in Fig. 4,

Fig. 5 eine Draufsicht auf eine Kombinationswaage nach Fig. 1 entsprechend der Linie V in Fig. 1,

Fig. 6 eine der Fig. 5 entsprechende Draufsicht auf eine Kombinationswaage, bei der die Wäge- und Hilfsbehälter längs geraden Linien angeordnet sind,

Fig. 7 eine der Fig. 5 entsprechende Draufsicht auf eine Kombinationswaage, bei der die Wiege- und Hilfsbehälter längs einer geraden Linie angeordnet sind und

Fig. 8 eine der Fig. 5 entsprechende Draufsicht auf eine Kombinationswaage, bei der die Wiege- und Hilfsbehälter längs einer geraden Linie angeordnet sind, wobei die Schwenkachse rechtwinklig zur Längsachse der Förderrinne ist.

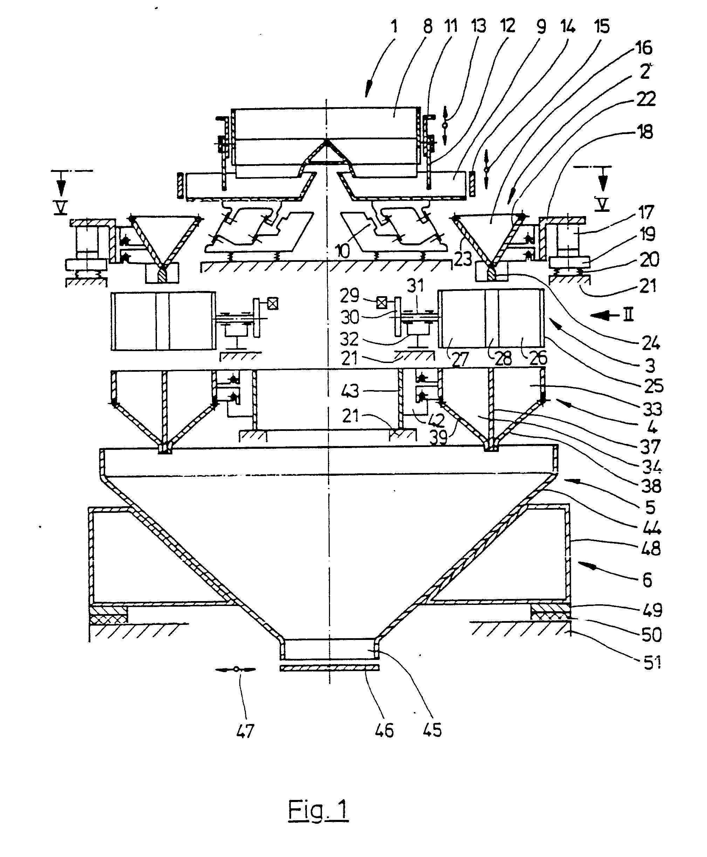

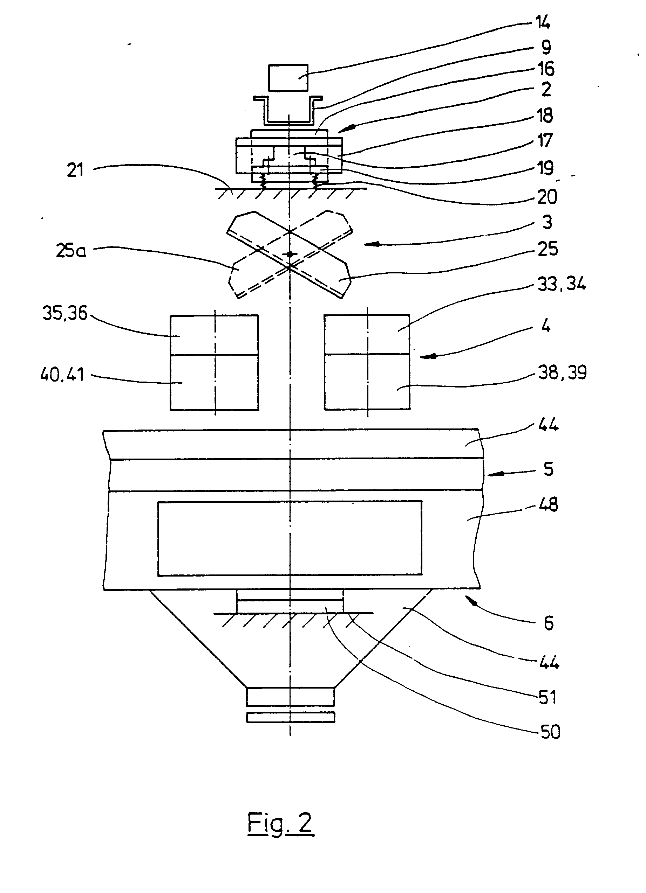

Die Kombinationswaage nach den Fig. 1, 2 und 3 hat einen insgesamt mit 1 bezeichneten Produktverteiler, mehrere, kreisförmig angeordnete Wiegeeinheiten 2, unterhalb der Wiegeeinheiten mehrere Chargen-Verteiler 3, unterhalb der Chargen-Verteiler 3 mehrere Hilfsbehälter 4, unter den Hilfsbehältern 4 einen Sammeltrichter 5 und eine Gehäuse 6, sowie eine Kombinations- und Schleusensteuerung, die nicht dargestellt ist.

Der in Fig. 1 dargestellte Produktverteiler 1 hat einen Zuteilbehälter 8 und sternförmig angeordnete Zuteilrinnen 9, die vom Zuteilbehälter 8 aus mit zu verpackendem Schüttgut beschickt werden. Die Zuteilrinnen 9 werden in bekannter Weise mittels eines Vibrators 10 in Schwingungen versetzt, wodurch eine Förderwirkung in Richtung der Wiegebehälter 2 entsteht. Die Tätigkeit des Vibrators 10 wird durch ein Steuersignal gesteuert, wodurch die Förderwirkung der Zuteilrinne 9 reguliert werden kann. Der Zuteilbehälter 8 kann auch mit Schiebern 11 ausgerüstet werden, die mit einem elastischen Vorhang 12 versehen sind, um Schüttgutverkeilungen zu vermeiden. Der Schieber 11 ist in Richtungen 13 verstellbar. Die Zuteilrinnen 9 sind mit Schleusen 14 ausgerüstet, die längs den Richtungen der Pfeile 15 verschiebbar sind.

Jede Wiegeeinheit 2 besteht aus einem Wiegebehälter 16, der an einem Gewichtgeber 17 aufgehängt ist. Je nach Bauart des Gewichtgebers 17 richtet sich die Form des Gewichtsübertragers 18, der den Weigebehälter 16 mit dem Gewichtgeber 17 verbindet. Der Gewichtgeber 17 ist an einer Platte 19 befestigt, die mit Hilfe von Dämpfungslementen 20 mit dem Rahmen 21 verbunden sind. Der Wiegebehälter 16 besitzt zwei Klappen 22, 23, die unabhängig voneinander betätigt werden können. Unterhalb der Klappen 22, 23 befindet sich ein Gleitstück 24, das für eine Verteilung der abgewogenen Chargen dient.

Unter jeder Wiegeeinheit 2 befindet sich ein Chargenverteiler 3, der eine Verteilung der Chargen bewirkt, allerdings wird die Größe der Charge beibehalten. "Verteiler" bedeutet hier also nur, daß die nach und nach anfallenden Chargen insgesamt auf verschiedene Plätze verteilt werden. Der Chargenverteiler 3 besteht aus einer schwenkbaren Rutsche 25, die zwei Leitbahnen 26, 27 hat, die verbunden sind mit einem Zwischenelement 28 und einem Antriebselement 29, das über eine Antriebsscheibe 30 (oder einen Antriebshebel), sowie eine Antriebswelle 31, die Rutsche 25 antreibt. Die Antriebswelle 31 ruht in einem Lagerbock 32, der auf dem Gehäuse 21 befestigt ist.

Unterhalb des Chargenverteilers 3 befindet sich ein Hilfsbehältersatz 4. Der Hilfsbehältersatz 4 kann aus vier, oder mehreren einzelnen Hilfsbehältern 33, 34, 35, 36 bestehen. Zwei Hilfsbehälter können auch mittels einer Trennwand 37 verbunden werden. Jeder Hilfsbehälter (z.B. 33) hat eine Bodenklappe 38, die unabhängig gesteuert werden kann. Die Hilfsbehälter sind über eine Aufhängevorrichtung 42 und eine Tragwand 43, mit dem Gehäuse 21 verbunden.

Unter den Hilfsbehältersätzen 4 befindet sich ein Sammeltrichter 5, der auch aus einzelnen Rutschsegmenten (für jeden Hilfsbehältersatz 4 ein Segment) bestehen kann.

Der Sammeltrichter 5 besteht aus einem Trichter 44, einem Sammelrohr 45 und einer Synchronisationklappe 46, die sich in Richtung des Pfeiles 47 bewegt. Die Synchronisationsklappe 46 wird von der Verpackungsmaschine gesteuert, dient aber auch zur Auslösung der Entleerung der ausgewählten Hilfsbehälter.

Das ganze Maschinengehäuse 6 besteht aus dem Gehäuse 21, dem Rahmen 48 und den Stützen 49. Das Maschinengehäuse 6 ist mittels Dämpfungselementen 50 auf dem Gestellt 51 abgestützt.

Bei Öffnung der Klappe 22 fließt das Gut in die Leitbahn 26, und von dieser aus je nach Stellung der Rutsche 25 in einen der Hilfsbehälter 33 oder 35.

Im Anspruch 4 wurde ein Anwendungsbeispiel mit einer Vorratsschale 7 dargestellt. Diese besteht aus dem Vorratsbehälter 52 mit der Bodenklappe 53 und der Aufhängevorrichtung 54, die am Gehäuse 21 befestigt sind.

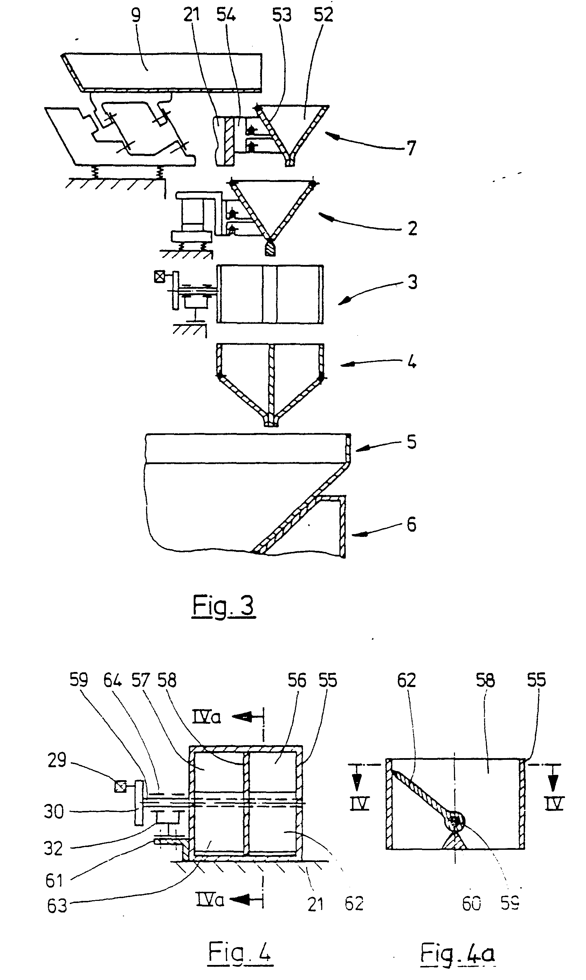

Im Fig. 4 und 4a wurde eine andere Ausführung eines Chargenverteilers dargestellt (insgesamt bezeichnet mit 3a). Der Chargenverteiler 3a besteht aus einem Rohr 55 mit zwei Kanälen 56, 57 die durch eine Zwischenwand 58 voneinander getrennt sind, sowie aus zwei Klappen 62, 63 und einer Antriebswelle 59. Die Antriebswelle 59 ist in Lagern 64 gelagert und über den Lagerbock 32 an dem Rohr 55 befestigt. Das Rohr 55 wiederum ist am Gehäuse 21 befestigt. Die Funktion ist bei gemeinsamer Betrachtung des Rohres 55 und des Vertikalschnittes nach Fig. 4a ersichtlich.

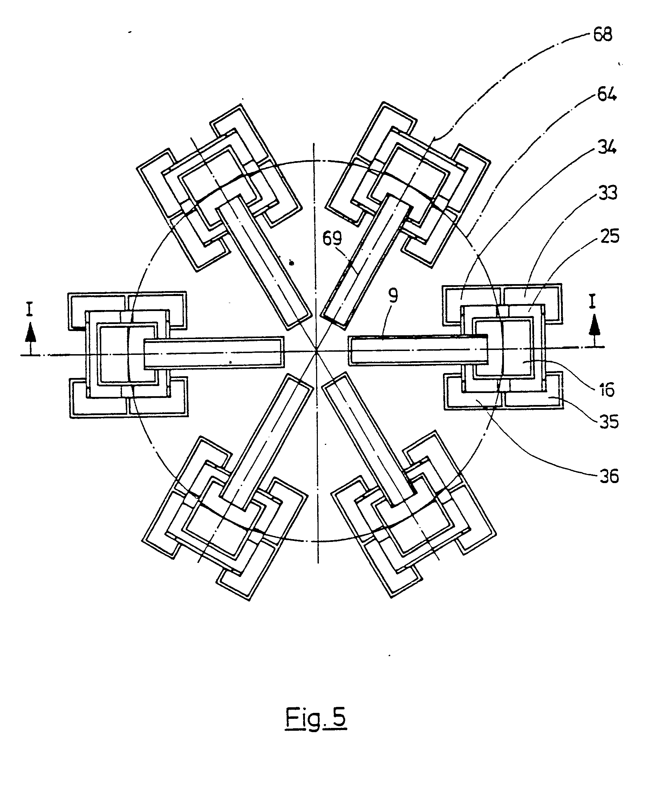

Wie man aus Fig. 5 ersehen kann, ist die Zahl der Hilfsbehälter vier mal so groß wie die Zahl der Wiegeeinheiten. Das Anzahlverhältnis der Hilfsbehälter zu den Wiegeeinheiten kann aber auch zwei, sechs, acht und mehr betragen.

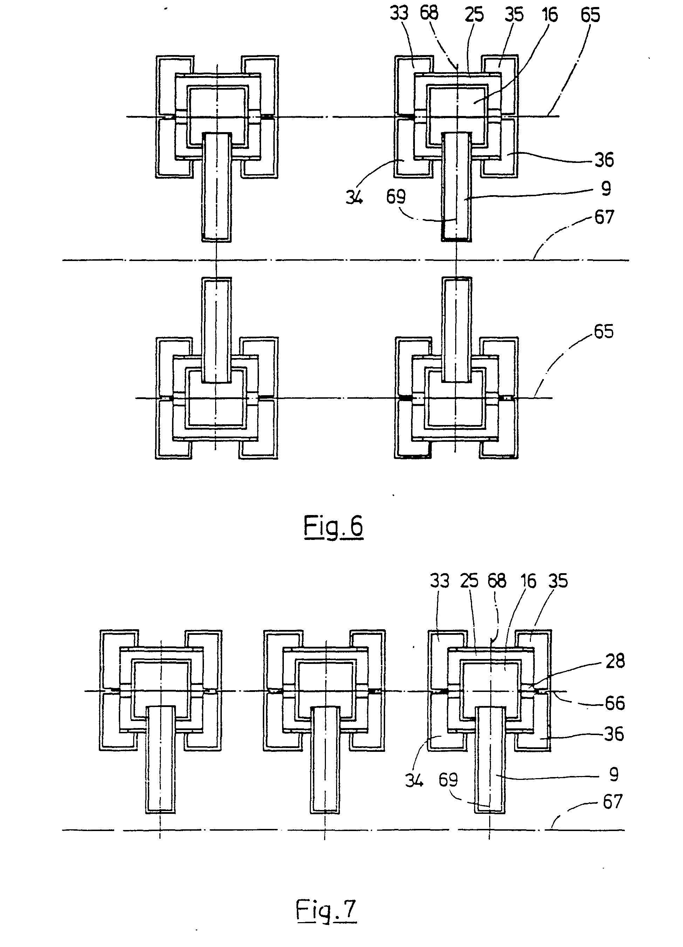

Die Anordnung der Hilfsbehältersätze 4 kann längs einer gekrümmten oder einer geraden Mittellinie 65, 66 erfolgen. Die gekrümmte Anordnung (die nicht unbedingt kreisförmig sein muß) kann beiderseits einer vertikalen Längsmittelebene 67 liegen oder nur einseitig, wie in Fig. 7 dargestellt. Die Anzahl der Wiegeeinheiten kann beliebig sein und von eins bis zu einer beliebigen Zahl reichen.

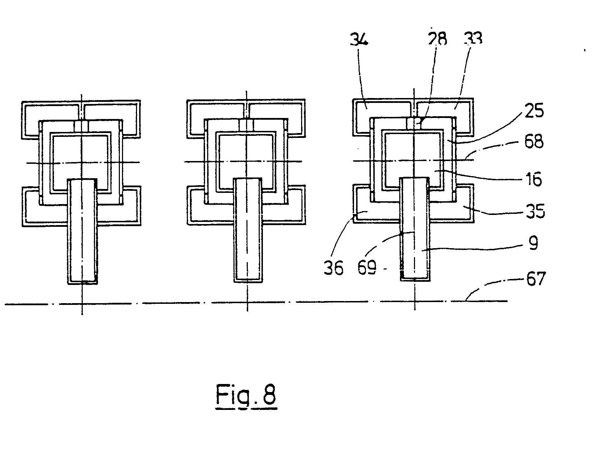

In Fig. 5, 6 und 7 sind Anordnungen dargestellt, bei denen die Schwenkachsen 68 der Chargenverteiler 25 mit den Rinenachsen 69 übereinstimmen, in Fig. 8 dagegen ist eine Anordnung dargestellt, bei der die Schwenkachse 68 senkrecht zur Förderrinenachse 69 angeordnet ist. Diese Version entspricht dem Patentanspruch 11.

**Patentansprüche**

1. Wiegevorrichtung, insbesondere zum Wiegen von grobstükkigen Produkten, mit einem Produktverteiler, mehreren Wiegeeinrichtungen, von denen jede einen vom Produktverteiler aus speisbaren Wiege-Produktbehälter und einen diesem zugeordneten Gewichtgeber aufweist, unterhalb der Wiege-Produktbehälter angeordneten Teilmengen-Produktbehältern, wobei einem Wiege-Produktbehälter mindestens zwei Teilmengen-Produktbehälter zugeordnet sind, in die der Inhalt der Wiege-Produktbehälter entleerbar ist, einem Sammeltrichter zum Sammeln von aus mehreren Teilmengen-Produktbehältern abgegebenen Teilmengen und einer Kombinations-Wahlschaltung, die aus den Teilmengen eine Kombination einer bestimmten Anzahl von Teilmengen ermittelt, die zusammen einer gewünschten Gesamtmenge möglichst nahekommen und die Entleerung in den Sammeltrichter durch Betätigung von Schleusen an den Teilmengen-Produktbehältern entsprechend steuert, dadurch gekennzeichnet, daß in einer zweiten Verteilstation (3) unterhalb der ersten Weichenelemente (2) zweite Weichenelemente (25) angeordnet sind, die in einer quer, vorzugsweise rechtwinklig zu der ersten Verteilebene orientierten zweiten Verteilebene schwenkbar sind, daß eventuell unterhalb der zweiten Verteilebene weitere Verteilebenen angeordnet sind, wobei die Verteilrichtungen in gleicher Weise abwechseln wie zwischen der ersten und zweiten Verteilebene, und daß unterhalb der zweiten Weichenelemente (25) der letzten Verteilebene Teilmengen-Produktbehälter (4) angeordnet sind, die über die letzten zweiten Weichenelemente (25) mit Teilmengen befüllbar sind.

2. Wiegevorrichtung nach Anspruch 1, dadurch gekennzeichnet, daß jeder Wiegebehälter (2) oder ein an diesen anschließender Zwischenbehälter schwenkbar ist und ein erstes Weichenelement bildet.

3. Wiegevorrichtung nach Anspruch 2, dadurch gekennzeichnet, daß die zwischen Weichenelemente (25) separate Baugruppen sind, die keine zusätzliche Funktion, wie z.B. eine Wiegefunktion, erfüllen.

4. Wiegevorrichtung nach einem der vorhergehenden Ansprüche, dadurch gekennzeichnet, daß mindestens einige zweite Weichenelemente (25) als kippbare Doppelrinnen ausgebildet sind, von denen bei einem Verteilvorgang wahlweise eine der beiden Einzelrinnen befüllbar ist.

5. Wiegevorrichtung nach einem der vorhergehenden Ansprüche, dadurch gekennzeichnet, daß mindestens einige Weichenelemente zwei etwa vertikale Führungskanäle (56, 57) aufweisen, die vorzugsweise als Rohr mit geraden Innenwänden und einer Querwand (58) gestaltet sind, welche von einer willkürlicht betätigbaren Klappenwelle (59) durchgriffen ist, die mit zwei Verschlußklappen (62, 63) verbunden ist, vorzugsweise im Bereich einer Abwinklung der Klappen.

6. Wiegevorrichtung nach einem der vorhergehenden Ansprüche, dadurch gekennzeichnet, daß die Wiegebehälter (16) Verschlußklappen (22, 23) aufweisen, deren Klappenwellen vorzugsweise Teilkreise tangieren oder parallel zu Tangenten von Teilkreisen angeordnet und gleichmäßig verteilt sind.

7. Wiegevorrichtung nach einem der vorhergehenden Ansprüche, dadurch gekennzeichnet, daß die Wiegebehälter, die Teilmengen-Produktbehälter und die Weichenelemente auf Teilkreisen gleichmäßig verteilt sind, die vorzugsweise gleiche Durchmesser haben.

8. Wiegevorrichtung nach Anspruch 7, dadurch gekennzeichnet, daß auf jedem Teilkreis sechs Behälter angeordnet sind.

9. Wiegevorrichtung nach Anspruch 8, dadurch gekennzeichnet, daß die Behälter in vertikalen Ebenen angeordnet sind, vorzugsweise in einer vertikalen Symmetrieebene, von deren Bereich aus Verpackungsgut in den Bereich der anderen vertikalen Ebenen geführt wird.

10. Wiegevorrichtung nach einem der Ansprüche 1 bis 9, dadurch gekennzeichnet, daß die Behälter in einer vertikalen Ebene angeordnet sind und daß von einer dazu parallelen Ebene Verpackungsgut zugeführt wird.

11. Wiegevorrichtung nach einem der vorhergehenden Ansprüche, dadurch gekennzeichnet, daß die Schwenkachsen (68) der zweiten Weichenelemente (25) mit den Rinnenachsen (69) übereinstimmen oder parallel dazu sind (Schwenkachse 68 zu Rinnenachse 69), oder senkrecht zueinander angeordnet sind.

12. Wiegevorrichtung nach einem der vorhergehenden Ansprüche, dadurch gekennzeichnet, daß zum Schwenkantrieb der diversen Behälter Pneumatikzylinder vorgesehen sind.

**Revendications**

1. Dispositif de pesage, notamment pour le pesage de produits en gros morceaux, comprenant: un distributeur de produits; plusieurs unités de pesage dont chacune comporte un conteneur de produit à peser alimentable par le distributeur de produits en un indicateur de poids qui lui est adjoint; des conteneurs de quantités partielles de produit, disposés en dessous du conteneur de produit à peser; au moins deux conteneurs de quantités partielles de produit, dans lesquels peut être vidé le contenu des conteneurs de produit à peser, étant affectés à un conteneur de produit à peser; un entonnoir collecteur pour la collecte de quantités partielles livrées par plusieurs conteneurs de quantités partielles; et un circuit sélecteur de combinaisons qui détermine, à partir des quantités partielles, une combinaison d'un nombre déterminé de quantités partielles, qui, réunies, se rapprochent le plus possible d'une quantité totale désirée, tandis que le vidage dans l'entonnoir collecteur est commandé en actionnant en conséquence des écluses prévues sur les conteneurs de quantités partielles, caractérisé en ce qu'il est disposé, dans une deuxième station de distribution (3) située en dessous des premiers éléments d'aiguillage (2), des deuxièmes éléments d'aiguillage (25), qui peuvent pivoter dans un deuxième plan de distribution orienté de préférence perpendiculairement au premier plan de distribution; en ce qu'il est éventuellement disposé, en dessous du deuxième plan de distribution, d'autres plans de distribution dont les directions de distribution alternent de la même manière qu'entre le premier et le deuxième plan de distribution; et en ce qu'il est disposé, en dessous des deuxièmes éléments d'aiguillage (25) du dernier plan de distribution, des conteneurs de quantités partielles de produit (4), qui peuvent être remplis de quantités partielles au moyen des derniers deuxièmes éléments d'aiguillage (25).

2. Dispositif de pesage selon la revendication 1, caractérisé en ce que chaque conteneur de pesage (2), ou un conteneur intermédiaire relié à celui-ci, peut pivoter et constitue un premier élément d'aiguillage.

3. Dispositif de pesage selon la revendication 2, caractérisé en ce que les deuxièmes éléments d'aiguillage (25) sont des groupes séparés, qui n'assument pas de fonction supplémentaire, telle qu'une fonction de pesage.

4. Dispositif de pesage selon l'une des revendications qui précèdent, caractérisé en ce qu'au moins certains deuxièmes éléments d'aiguillage sont constitués par de doubles conduits basculants, dont l'un des deux conduits, au choix, peut être rempli lors d'un processus de distribution.

5. Dispositif de pesage selon l'une des revendications qui précèdent, caractérisé en ce qu'au moins certains éléments d'aiguillage présentent deux canaux de guidage (56, 57) sensiblement verticaux qui sont constitués de préférence par des tubes ayant des parois intérieures droites et une paroi transversale (58), qui est traversée par un pivot de volet (59) actionnable à volonté, lequel est relié à deux volets de fermeture (62, 63) de préférence dans la région d'un basculement des volets.

6. Dispositif de pesage selon l'une des revendications qui précèdent, caractérisé en ce que les conteneurs de pesage (16) présentent des volets de fermeture (22, 23) dont les pivots sont, de préférence, tangents à des cercles de base ou sont disposés parallèlement à des tangentes à des cercles de base, et sont répartis régulièrement.

7. Dispositif de pesage selon l'une des revendications qui précèdent, caractérisé en ce que les conteneurs de pesage, les conteneurs de quantités partielles et les éléments d'aiguillage sont répartis régulièrement sur des cercles de base, ayant, de préférence, un même diamètre.

8. Dispositif de pesage selon la revendication 7, caractérisé en ce qu'il est disposé six conteneurs sur chaque cercle de base.

9. Dispositif de pesage selon la revendication 8, caractérisé en ce que les conteneurs sont disposés dans des plans verticaux, de préférence dans un plan de symétrie vertical, du produit à emballer étant guidé de la région de ce plan vers celle des autres plans verticaux.

10. Dispositif de pesage selon l'une des revendications 1 à 9, caractérisé en ce que les conteneurs sont disposés dans un plan vertical et en ce que du produit à emballer est amené depuis un plan parallèle à celui-ci.

11. Dispositif de pesage selon l'une des revendications qui précèdent, caractérisé en ce que les axes de pivotement (68) des deuxièmes éléments d'aiguillage (23) coïncident avec les axes de conduits (69) ou sont disposés parallèlement à ces derniers (axe de pivotement 68 par rapport à l'axe du conduit 69), ou sont perpendiculaires entre eux.

12. Dispositif de pesage selon l'une des revendications qui précèdent, caractérisé en ce qu'il est prévu des vérins pneumatiques pour commander le pivotement des divers conteneurs.

**Claims**

1. Weighing device, more especially for weighing bulky products, with a product distributor, several weighing units, each of which comprises a weighing product container which can be supplied from the product distributor and a weight indicator associated with this container, part-quantity product containers arranged beneath the weighing product container, at least one weighing product container having associated therewith at least two part-quantity product containers into which the contents of the weighing product containers can be emptied, a collecting hopper for the collection of part quantities delivered from a plurality of part-quantity product containers and a combination selection circuit which, from the part quantities, establishes a combination of a certain number of such quantities, which together come as close as possible to the desired total quantity, and accordingly controls the emptying into the collecting hopper by actuation of locks or traps at the part-quantity product containers, characterised in that, in a second distribution station (3), below the first switching elements (2), there are arranged second switching elements (25) which are swivellable in a second distribution plane, advantageously arranged at right-angles to the first distribution plane, that further distribution planes are possibly arranged beneath the second distribution plane, the distributing directions alternating in the same manner as between the first and second distribution planes, and that portional product containers (4) are arranged beneath the second switching elements (25) of the last distribution plane, which containers are able to be filled with portions by way of the last second switching elements (25).

2. Weighing device according to Claim 1, characterised in that each weighing container (2) or an intermediate container adjoining this latter is pivotable and forms a first switching element.

3. Weighing device according to Claim 2, characterised in that the second switching elements (25) are separate structural groups, which do not fulfill any additional function, as for example a weighing function.

4. Weighing device according to one of the preceding claims, characterised in that at least some second switching elements (25) are constructed as tiltable double channels, of which, in a distributing operation, it is possible at will for one of the two separate channels to be filled.

5. Weighing device according to one of the preceding claims, characterised in that at least some switching elements comprise two approximately vertical guide channels (56, 57), which are advantageously formed as tubes with straight internal walls and a transverse wall (58), through which extends a hinged shaft (59) which can be actuated at will and which is connected to two closure flaps (62, 63), advantageously in the region of a bend in the flaps.

6. Weighing device according to one of the preceding claims, characterised in that the weighing containers (16) comprise closure flaps (22, 23), of which the shafts are advantageously at a tangent to pitch circles or are arranged and uniformly distributed parallel to tangents of pitch circles.

7. Weighing device according to one of the preceding claims, characterised in that the weighing containers, the portional product containers and the switching elements are distributed uniformly on pitch circles which advantageously have like diameters.

8. Weighing device according to Claim 7, characterised in that six containers are arranged on each pitch circle.

9. Weighing device according to Claim 8, characterised in that the containers are arranged in vertical planes, advantageously in a vertical plane of symmetry, from the region of which material to be packed is guided into the region of the other vertical planes.

10. Weighing device according to one of the Claims 1 to 9, characterised in that the containers are arranged in one vertical plane and that packaging material is supplied from a plane which is parallel thereto.

11. Weighing device according to one of the preceding claims, characterised in that the pivot shafts (68) of the second switching end (25) conform to the channel axes (69) or are parallel thereto (pivot shaft 68 to channel axis 69) or are arranged perpendicular to one another.

12. Weighing device according to one of the preceding claims, characterised in that pneumatic cylinders are provided for the swivellable drive of the various containers.

_Fig. 1_

Fig. 2

Fig. 3

Fig. 4

Fig. 4a

Fig. 5

Fig.6

Fig.7

Fig. 8